# EUROPÄISCHE PATENTSCHRIFT

(11) **EP 3 536 640 B1**
(45) Veröffentlichungstag und Bekanntmachung des Hinweises auf die Patenterteilung: **17.11.2021**
(21) Anmeldenummer: 19156451.7
(22) Anmeldetag: 11.02.2019
(51) Int. Cl.: B65G 57/24

(54) **VORRICHTUNG UND VERFAHREN ZUM KOMMISSIONIEREN VON LADEGUT IN ROLLBEHÄLTER**
DEVICE AND METHOD FOR PICKING LOADED MATERIAL IN ROLLING CONTAINERS
DISPOSITIF ET PROCÉDÉ DE PRÉPARATION DE COMMANDES DES MARCHANDISES TRANSPORTÉES DANS UN RÉCIPIENT ROULANT

(30) Priorität: 06.03.2018 DE 102018203336
(43) Veröffentlichungstag der Anmeldung: 11.09.2019
(73) Patentinhaber: Winkel GmbH, 75428 Illingen (DE)
(72) Erfinder: Loupas, Athanasios, 75417 Mühlacker (DE); Weisser, Alexander, 75180 Pforzheim (DE)
(74) Vertreter: Patentanwälte Ruff, Wilhelm, Beier, Dauster & Partner mbB

(56) Entgegenhaltungen:
- WO-A1-2013/038102
- DE-A1-102012 022 454
- DE-A1-102014 220 046
- DE-U1-202016 001 581
- NL-C2- 1 018 885
- US-B1- 8 074 431

## Beschreibung

Die Erfindung betrifft eine Vorrichtung und ein Verfahren zum Kommissionieren von Ladegut in Rollbehälter.

Rollbehälter werden in großem Umfang zum Transportieren von Waren, insbesondere zu Supermärkten, verwendet. Ein Ladeboden des Rollbehälters ist auf seiner Unterseite mit Rollen versehen und von der Oberseite des Ladebodens gehen in der Regel zwei seitliche Gitterwände aus, die einander gegenüberliegend angeordnet sind. Die Gitterwände sind wesentlich höher als die Breite des Ladebodens, so dass sich die Gitterwände im unbeladenen Zustand in der Regel nach innen, also aufeinander zu, neigen. Die Gitterwände werden zum Stabilisieren der gestapelten Waren benötigt, da die Stapel eine der Fläche des Ladebodens entsprechende kleine Grundfläche, aber eine große Höhe aufweisen. Zum Stabilisieren von beladenen Rollbehältern werden die Rollbehälter in der Regel mit Kunststofffolie umwickelt. Aufgrund der im leeren Zustand nach innen geneigten Gitterwände und der großen Stapelhöhe von Rollbehältern ist das automatische Beladen von Rollbehältern in bekannten Kommissioniervorrichtungen problematisch.

Aus der deutschen Offenlegungsschrift DE 10 2014 220 046 B4 ist eine Vorrichtung zum Kommissionieren auf Paletten nach dem Oberbegriff des Anspruchs 1 bekannt. Eine Palette wird dort von unten her in einen Kommissionierschacht eingeschoben und während des Beladens schrittweise abgesenkt, so dass eine Oberseite der zuletzt gestapelten Ladegutschicht etwa auf Höhe der Kommissionierebene angeordnet ist. Die Vorrichtung weist einen Palettenzwischenspeicher auf, der seitlich neben dem Kommissionierschacht angeordnet ist. Mittels dieses Palettenzwischenspeichers kann der Zeitraum zwischen dem Absenken einer vollständig beladenen Palette im Kommissionierschacht und dem Beginn des Beladevorgangs einer neuen, leeren Palette auf Höhe der Kommissionierebene verkürzt werden.

Aus der deutschen Gebrauchsmusterschrift DE 20 2016 001 581 U1 ist eine weitere Vorrichtung zum Kommissionieren auf Paletten bekannt. Das Kommissionieren kann dort automatisch mittels eines Roboters erfolgen. Um auf unterschiedliche Palettengrößen kommissionieren zu können, kann ein Querschnitt des Kommissionierschachts durch verstellbare Begrenzungswände verändert werden.

Aus der deutschen Offenlegungsschrift DE 10 2012 022 454 A1 ist eine Packstation mit einem Stapelbildungstrichter und einer integrierten Umreifungseinrichtung bekannt.

Aus dem niederländischen Dokument NL 1 018 885 ist eine Vorrichtung zum Beladen und zum Stapeln von gefüllten Säcken in Behälter bekannt.

Aus der internationalen Offenlegungsschrift WO 2013/038102 A1 ist eine Vorrichtung zum Übergeben von vorgeformten Lagen von Gegenständen auf eine Oberseite einer Palette bekannt.

Aus der amerikanischen Patentschrift US 8,074,431 B1 ist eine Vorrichtung zum Stapeln von Gegenständen auf eine Palette bekannt.

Mit der Erfindung soll eine Vorrichtung zum Kommissionieren von Ladegut in Rollbehälter verbessert werden.

Erfindungsgemäß ist hierzu eine Vorrichtung mit den Merkmalen von Anspruch 1 und ein Verfahren mit den Merkmalen von Anspruch 10 vorgesehen. Vorteilhafte Weiterbildungen der Erfindung sind Gegenstand der Unteransprüche.

Eine Vorrichtung zum Kommissionieren von Ladegut in Rollbehälter, wobei der Rollbehälter einen Ladeboden und wenigstens eine seitliche Gitterwand aufweist, ist mit einer Kommissionierbühne, einem Kommissionierschacht, der sich bis zu einer Kommissionierebene, in der Ladegut während des Kommissionierens bewegt wird, auf der Kommissionierbühne erstreckt, einer Hub- und Absenkvorrichtung zum Heben und Absenken des Rollbehälters in dem Kommissionierschacht, einer in dem Kommissionierschacht von der Seite her einfahrbaren und wieder ausfahrbaren Zunge zum Beladen mit Ladegut, einer Vorrichtung zum schrittweisen Absenken der Zunge während des Beladens mit Ladegut, so dass eine Oberseite einer zuletzt auf die Zunge gelegten Ladegutschicht etwa auf Höhe der Kommissionierebene angeordnet ist, und Abstreifmitteln versehen, die zumindest beim Ausfahren der Zunge aus dem Kommissionierschacht Ladegut von der Oberseite der Zunge auf den Ladeboden des Rollbehälters abstreifen.

Ladegut wird also zunächst auf die Zunge aufgelegt und erst nachfolgend von der Zunge auf den Ladeboden des Rollbehälters abgestreift. Es wird gemäß der Erfindung also vermieden, an der wenigstens einen Gitterwand des Rollbehälters oder den üblicherweise zwei gegenüberliegenden Gitterwänden des Rollbehälters vorbei den Rollbehälter zu beladen. Da das Ladegut zunächst auf der Zunge gestapelt wird, kann die Zunge in einfacher Weise und wie bei Paletten üblich beladen werden. Dies kann auch automatisiert mittels eines Roboters oder eines Ladeportals geschehen. Erst dann, wenn der für den Rollbehälter vorgesehene Ladegutstapel vollständig auf der Zunge gestapelt ist, wird die Zunge abgesenkt oder der Ladeboden des Rollbehälters angehoben, bis der Ladeboden unmittelbar unterhalb der Zunge oder gar anliegend an die Unterseite der Zunge angeordnet ist. Die Zunge wird dann aus dem Kommissionierschacht herausgefahren und gleichzeitig wird der auf der Zunge aufliegende Ladegutstapel auf den Ladeboden des Rollbehälters abgestreift. Dieses Abstreifen des Ladegutstapels auf den Ladeboden des Rollbehälters erfolgt noch innerhalb des Kommissionierschachts. Nach dem vollständigen Abstreifen kann der Rollbehälter im Kommissionierschacht wieder nach unten abgesenkt und dann gleichzeitig mit dem kontinuierlichen oder schrittweisen Verlassen des Kommissionierschachts nach unten hin mit Folie zur Ladungssicherung umwickelt werden. Die erfindungsgemäße Vorrichtung ermöglicht es dadurch in sehr zuverlässiger Weise, auch Rollbehälter mit wenigstens einer seitlichen Gitterwand prozesssicher und gegebenenfalls vollautomatisiert zu beladen.

In Weiterbildung der Erfindung weisen die Abstreifmittel einen bewegbaren Anschlag auf.

Ein solcher Anschlag kann dann auf die Oberseite der beladenen Zunge unmittelbar angrenzend an den Ladegutstapel angeordnet werden. Beim Herausziehen der Zunge verändert der Anschlag seine Position zum Ladegut nicht und kann dadurch das Ladegut von der Zunge auf den Ladeboden des Rollbehälters abstreifen. Der bewegbare Anschlag wird dabei bis auf die Oberseite der Zunge oder bis unmittelbar vor die Oberseite der Zunge abgesenkt. Je nach Höhe des Ladegutstapels auf der Zunge nimmt die Zunge eine unterschiedliche Höhenposition im Kommissionierschacht ein, so dass auch der Anschlag in unterschiedliche Höhenpositionen bewegt wird.

In Weiterbildung der Erfindung ist der bewegbare Anschlag mittels eines Rollladens ausgebildet, der eine Öffnung in einer ersten Begrenzungswand des Kommissionierschachts, durch die die Zunge in den Kommissionierschacht ein- und ausgefahren werden kann, wenigstens abschnittsweise verschließen kann.

Mittels eines Rollladens als bewegbarer Anschlag kann die Unterkante des Anschlags, mithin die Unterkante des Rollladens, problemlos und unabhängig von einer Höhenposition der Zunge auf die Oberseite der Zunge oder unmittelbar vor die Oberseite der Zunge abgesenkt werden. Wird der Rollladen zurückgezogen, ist die Öffnung in der ersten Begrenzungswand wieder frei und die Zunge kann erneut in den Kommissionierschacht etwa auf Höhe der Kommissionierebene eingefahren werden, um einen weiteren Ladegutstapel bilden zu können.

In Weiterbildung der Erfindung kann die Zunge durch eine Öffnung in einer ersten Begrenzungswand des Kommissionierschachts ein- und ausgefahren werden und eine zweite, der ersten Begrenzungswand gegenüberliegende zweite Begrenzungswand des Kommissionierschachts ist in Richtung auf den Innenraum des Kommissionierschachts zu bewegbar ausgebildet oder eine Schachtverengungswand kann in Richtung auf den Innenraum des Kommissionierschachts zu bewegt werden.

Auf diese Weise kann der Kommissionierschacht in seinem freien Querschnitt verändert werden, um unterschiedliche Größen von Rollbehältern mit unterschiedlich großen Ladeböden beladen zu können oder aber auch um wahlweise Paletten oder Rollbehälter beladen zu können.

In Weiterbildung der Erfindung ist eine schlitzartige Führung für die wenigstens eine Gitterwand des Rollbehälters vorgesehen, wobei sich die Führung von der Kommissionierebene aus nach unten erstreckt und wobei eine Vorderfläche der schlitzartigen Führung eine Begrenzungswand des Kommissionierschachts bildet.

Mittels einer solchen Führung kann die Gitterwand des Rollbehälters hinter einer Begrenzungswand des Kommissionierschachts angeordnet werden. Die Begrenzungswand des Kommissionierschachts kann dadurch glattflächig ausgebildet sein und es ist beim Kommissionieren von Ladegut nicht zu befürchten, dass Ladegut an der Gitterwand des Rollbehälters hängen bleibt und den Kommissioniervorgang dadurch behindert. Üblicherweise sind an den Rollbehältern zwei Gitterwände und an der Vorrichtung zwei Führungen vorgesehen.

In Weiterbildung der Erfindung ist die schlitzartige Führung mittels eines U-artig gebogenen Führungsblechs gebildet, das dann, wenn die Gitterwand in die Führung eingeschoben ist, eine Trennfläche zwischen dem Innenraum des Kommissionierschachts und der seitlichen Gitterwand des Rollwagens bildet.

Mit anderen Worten werden die Gitterwand oder die Gitterwände des Rollwagens also in schlitzartige Taschen zwischen Führungsblechen und den dahinterliegenden Wandabschnitten des Kommissionierschachts eingeschoben. Auf diese Weise kann das Führungsblech eine glattflächige Begrenzung des Kommissionierschachts bilden. Die Führungsbleche können in Richtung auf den Innenraum des Kommissionierschachts zu ausgefahren werden oder wieder zurückgefahren werden, je nachdem, ob ein Rollbehälter oder eine Palette beladen werden soll.

In Weiterbildung der Erfindung weist der Rollwagen zwei einander gegenüberliegende seitliche Gitterwände auf und im Kommissionierschacht sind zwei einander gegenüberliegende schlitzartige Führungen vorgesehen.

Auf diese Weise können übliche Rollbehälter mit zwei einander gegenüberliegenden seitlichen Gitterwänden prozesssicher und gegebenenfalls vollautomatisiert beladen werden.

In Weiterbildung der Erfindung sind unterhalb der wenigstens einen schlitzartigen Führung Einführmittel zum Einführen der Oberkante der wenigstens einen seitlichen Gitterwand in die schlitzartige Führung vorgesehen.

Im unbeladenen Zustand sind die Gitterwände von üblichen Rollbehältern instabil und in der Regel nach innen, in Richtung auf die gegenüberliegende Gitterwand zu, geneigt. Um beim Anheben des Rollbehälters die Oberkanten der Gitterwand oder der Gitterwände zuverlässig in die schlitzartigen Führungen einführen zu können, sind Einführmittel zum Spreizen und Einführen der Gitterwände vorgesehen.

In Weiterbildung der Erfindung weisen die Führungsmittel in den Innenraum des Kommissionierschachts bewegbare Führungsrollen auf.

Solche bewegbaren Führungsrollen werden in den Querschnitt des Kommissionierschachts hineinbewegt, um die Gitterwände eines Rollbehälters zunächst aufzuspreizen und dann in die schlitzartigen Führungen einzuführen.

In Weiterbildung der Erfindung erstrecken sich zwei im rechten Winkel zueinander angeordnete und aneinander angrenzende Begrenzungswände des Kommissionierschachts über die Kommissionierebene hinaus.

Auf diese Weise ist in der Kommissionierebene ein Beladen und Entladen von zwei Seiten her möglich. Darüber hinaus steht ein rechtwinkliger Anschlag durch die zwei im rechten Winkel zueinander angeordneten und sich über die Kommissionierebene hinaus erstreckenden Begrenzungswände zur Verfügung. Wird beispielsweise Ladegut mittels eines Roboters in der Kommissionierebene bewegt, so kann der Roboter das Ladegut gegen die beiden im rechten Winkel zueinander angeordneten Begrenzungswände bewegen und dadurch eine hohe Positionsgenauigkeit des Ladeguts erzielen. Mit der erfindungsgemäßen Vorrichtung ist dies möglich, da das Ladegut zunächst auf der Zunge gestapelt wird und nicht zwischen die Gitterwände des Rollbehälters eingeschoben werden muss.

In Weiterbildung der Erfindung ist zum automatischen Beladen oder Entladen ein Roboter oder ein Ladeportal vorgesehen.

In Weiterbildung der Erfindung sind in einem unterhalb der Kommissionierebene an die Kommissionierebene anschließenden Bereich verstellbare Begrenzungswände des Kommissionierschachts vorgesehen, um einen freien Querschnitt des Kommissionierschachts wahlweise zu verändern.

Auf diese Weise können beispielsweise Rollbehälter mit unterschiedlich großen Ladeböden oder auch im Wechsel Paletten und Rollbehälter beladen werden.

In Weiterbildung der Erfindung ist gegenüber der Seite des Kommissionierschachts, von der die Zunge eingefahren wird, ein Palettenzwischenspeicher angeordnet.

Auf diese Weise können Rollbehälter und Paletten wahlweise beladen oder entladen werden. Der Palettenzwischenspeicher ist entsprechend der deutschen Offenlegungsschrift DE 10 2014 220 046 A1 und/oder der deutschen Gebrauchsmusterschrift DE 20 2016 001 581 U1 ausgebildet, deren Offenbarungsgehalt hiermit einbezogen wird.

Die der Erfindung zugrunde liegende Aufgabe wird auch durch ein Verfahren zum Kommissionieren von Ladegut mit einer erfindungsgemäßen Vorrichtung gelöst, wobei die folgenden Schritte vorgesehen sind:
- Einbringen des Rollbehälters in den Kommissionierschacht, so dass eine Oberseite der wenigstens einen seitlichen Gitterwand unterhalb oder auf Höhe der Kommissionierebene angeordnet ist, wobei in der Kommissionierebene Ladegut während des Kommissionierens bewegt wird,
- seitliches Einfahren der Zunge in den Kommissionierschacht, so dass die Zunge den Kommissionierschacht nach unten gegen Herunterfallen von Ladegut verschließt und eine Oberseite der Zunge im Wesentlichen auf Höhe der Kommissionierebene angeordnet ist,
- schichtweises Beladen der Oberseite der Zunge mit Ladegut,
- gegebenenfalls schrittweises Absenken der Zunge im Kommissionierschacht während des Beladens mit Ladegut, so dass eine Oberseite der zuletzt gestapelten Ladegutschicht etwa auf Höhe der Kommissionierebene liegt,
- Anheben des Rollbehälters, bis die Oberseite des Ladebodens des Rollbehälters unmittelbar unterhalb der Unterseite der Zunge angeordnet ist oder an der Unterseite der Zunge anliegt und
- Herausziehen der Zunge aus dem Kommissionierschacht und gleichzeitiges Abstreifen des auf der Zunge aufliegenden Ladeguts auf den Ladeboden des Rollbehälters.

Mit dem erfindungsgemäßen Verfahren wird also zunächst eine Zunge beladen, um beim Beladen in der Kommissionierebene eine gute Zugänglichkeit zu ermöglichen. Erst nach dem vollständigen Beladen der Zunge wird der Ladegutstapel durch Abstreifen zwischen die Gitterwände des Rollbehälters und auf den Ladeboden des Rollbehälters gebracht.

In Weiterbildung der Erfindung ist das Abstreifen des auf der Zunge aufliegenden Ladeguts durch wenigstens teilweises Verschließen einer Öffnung in der seitlichen Begrenzungswand des Kommissionierschachts, durch die die Zunge eingefahren und ausgefahren wird, mittels eines bewegbaren Anschlags und Herausziehen der Zunge aus dem Kommissionierschacht vorgesehen.

Je nach Höhe des Ladegutstapels, der in den Rollbehälter gebracht werden soll, nimmt die Zunge im Kommissionierschacht eine unterschiedliche Höhenposition ein. Ein bewegbarer Anschlag kann die Öffnung teilweise verschließen und dadurch für ein sicheres Abstreifen des Ladegutstapels sorgen.

In Weiterbildung der Erfindung erfolgt das Verschließen der Öffnung in der seitlichen Begrenzungswand mittels eines als Anschlag wirkenden Rollladens, wobei eine Unterkante des Rollladens vor dem Herausziehen der Zunge unmittelbar oberhalb oder auf der Oberseite der Zunge angeordnet wird.

Auf diese Weise kann der als Anschlag wirkende Rollladen an unterschiedliche Höhenpositionen der Zunge beim Herausziehen angepasst werden. Je nachdem, wie hoch ein Ladegutstapel auf der Zunge ist, nimmt die Zunge unterschiedliche Höhenpositionen ein, da in der Regel eine Oberseite des Ladegutstapels etwa auf Höhe der Kommissionierebene angeordnet ist.

In Weiterbildung der Erfindung ist das Einführen der wenigstens einen Gitterwand des Rollbehälters in schlitzartige Führungen vorgesehen, wobei die schlitzartigen Führungen eine Trennfläche zwischen der Gitterwand und dem Innenraum des Kommissionierschachts bilden.

Ladegut muss dadurch nicht zwischen die unebenen Gitterwände des Rollbehälters kommissioniert werden, da in einem solchen Fall die Gefahr besteht, dass Ladegut an den Gitterwänden hängen bleibt, bevor es seine endgültige Position erreicht. Die schlitzartigen Führungen stellen eine Trennfläche bereit, die das Kommissionieren von Ladegut erheblich erleichtert.

In Weiterbildung der Erfindung ist das Ausfahren der schlitzartigen Führungen in Richtung auf den Innenraum des Kommissionierschachts vor dem Einführen der Gitterwand vorgesehen.

Sollen Rollbehälter mit Gitterwänden kommissioniert werden, werden die schlitzartigen Führungen ausgefahren. Sollen dahingegen beispielsweise Paletten kommissioniert werden, werden die schlitzartigen Führungen nicht ausgefahren.

In Weiterbildung der Erfindung ist das Bewegen einer Begrenzungswand des Kommissionierschachts oder einer Schachtverengungswand in Richtung auf den Innenraum des Kommissionierschachts auf einer Seite des Kommissionierschachts, die der Seite des Kommissionierschachts, durch die die Zunge eingefahren wird, gegenüberliegt, vorgesehen.

Auf diese Weise kann verhindert werden, dass beim Beladen der Zunge Ladegut von der Zunge herunterfällt oder sich auch nur zwischen dem Ende der Zunge und der Begrenzungswand des Kommissionierschachts verklemmt.

In Weiterbildung der Erfindung ist das Bewegen der Schachtverengungswand mittels Schließen einer doppelflügeligen Schwenktüre vorgesehen.

Mittels einer doppelflügeligen Schwenktüre kann der Querschnitt des Kommissionierschachts in einfacher und zuverlässiger Weise verringert werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang beschrieben sind. In den Zeichnungen zeigen:
- Fig. 1: eine erfindungsgemäße Vorrichtung zum Kommissionieren von Ladegut in Rollbehälter gemäß einer ersten Ausführungsform beim Einfahren eines Rollbehälters auf einem Heber in einen Kommissionierschacht,
- Fig. 2: die Vorrichtung der Fig. 1 beim Ausfahren von Spreizrollen und Führungsblechen für die seitlichen Gitterwände des Rollbehälters,
- Fig. 3: die Vorrichtung der Fig. 1 nach dem Einfahren des Rollbehälters in den Kommissionierschacht, wobei die Gitterwände des Rollbehälters hinter den Führungsblechen verschwinden, eine Zunge zum Beladen mit Ladegut eingefahren ist und eine Schachtverengungswand in Form einer doppelflügeligen Schwenktüre geschlossen ist,
- Fig. 4: die Vorrichtung der Fig. 1 beim Beladen der Zunge mit Ladegut, wobei sich die Zunge für jede weitere Lage an Ladegut schrittweise absenkt,
- Fig. 5: die Vorrichtung der Fig. 1 nach dem vollständigen Beladen der Zunge mit einem Ladegutstapel in der vorgesehenen Höhe,
- Fig. 6: die Vorrichtung der Fig. 1 nach dem Anheben des Rollbehälters, bis eine Oberseite des Ladebodens des Rollbehälters unmittelbar unterhalb der Unterseite der Zunge oder gar anliegend an die Unterseite der Zunge angeordnet ist und sich die Oberkanten der Gitterwände des Rollbehälters etwa auf Höhe der Oberseite des Ladegutstapels befinden,
- Fig. 7: die Vorrichtung der Fig. 1 nach dem seitlichen Herausziehen der Zunge aus dem Kommissionierschacht und dem gleichzeitigen Abstreifen des Ladegutstapels auf den Ladeboden des Rollbehälters,
- Fig. 8: das Absenken des vollständig beladenen Rollbehälters nach unten aus dem Kommissionierschacht heraus, wobei der Rollbehälter zur Ladungssicherung mit Folie umwickelt wird, und
- Fig. 9: eine erfindungsgemäße Vorrichtung zum Kommissionieren von Ladegut in Rollbehälter gemäß einer weiteren Ausführungsform der Erfindung.

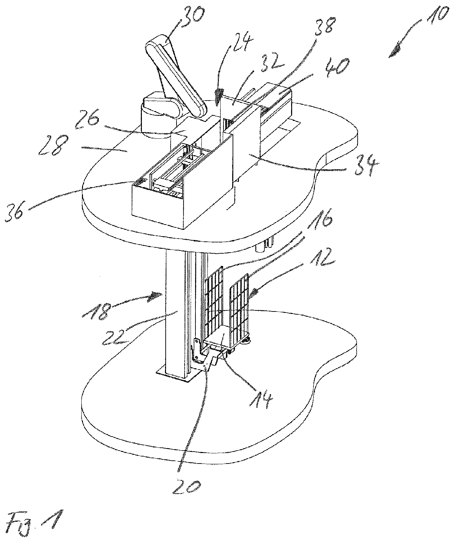

Fig. 1 zeigt eine erfindungsgemäße Vorrichtung 10 zum Kommissionieren von Ladegut in einen Rollbehälter 12. Der Rollbehälter 12 weist einen Ladeboden 14 und zwei einander gegenüberliegende und sich vom Ladeboden aus nach oben erstreckende Gitterwände 16 auf. Der Ladeboden 14 ist auf seiner Unterseite mit vier Rollen versehen. Rollbehälter 12 werden in der Regel zum Anliefern von Waren an Supermärkte verwendet. Wie in Fig. 1 zu erkennen ist, sind die Gitterwände 16 etwa doppelt so hoch wie der Ladeboden 14 breit ist. Die Gitterwände 16 sind daher im unbeladenen Zustand des Rollbehälters instabil und relativ zum Ladeboden 14 beweglich. Das automatische Beladen von Rollbehältern 12 ist aufgrund der Gitterwände 16 problematisch, da ein Roboter beispielsweise zwischen die beiden Gitterwände 16 bewegt werden müsste, um Ladegut auf dem Ladeboden 14 abzulegen. Hinzu kommt noch, dass im unbeladenen oder teilweise beladenen Zustand sich die Gitterwände 16 aufeinander zu neigen und den Freiraum oberhalb des Ladebodens 14 dadurch weiter begrenzen.

Im Zustand der Fig. 1 ist der Rollbehälter 12 auf einer Hebe- und Absenkvorrichtung 18 mit einem Greifer 20 und einem Mast 22, an dem der Greifer 20 angehoben und abgesenkt werden kann, angeordnet.

Mittels der Hebe- und Absenkvorrichtung 18 kann der Rollbehälter 12 von unten her in einen Kommissionierschacht 24 eingefahren werden. Der Kommissionierschacht 24 endet an einer Kommissionierebene 26, die auf einer Kommissionierbühne 28 angeordnet ist und die durch eine Oberfläche eines Kommissioniertisches 26a definiert ist. In der Kommissionierebene 26 wird Ladegut mittels eines Roboters 30 bewegt. Der Roboter 30 kann zu kommissionierendes Ladegut von einer in Fig. 1 nicht dargestellten Transportvorrichtung, beispielsweise einem Transportband, ergreifen und das Ladegut im Wesentlichen in der Kommissionierebene 26, also etwa auf der Höhe des Kommissioniertisches 26a, zum Kommissionierschacht 24 bewegen und dort absetzen oder umgekehrt.

Der Kommissionierschacht 24 ist durch vier Begrenzungswände definiert, wobei zwei der Begrenzungswände 32, 34 sich über die Kommissionierebene 26 hinaus erstrecken. Die beiden Begrenzungswände 32, 34 bilden oberhalb der Kommissionierebene 26 dadurch einen rechtwinkligen Anschlag. Der Roboter 30 kann dadurch Ladegut gegen die beiden Begrenzungswände 32, 34 schieben und dadurch das Ladegut exakt relativ zum Kommissionierschacht 24 positionieren.

Seitlich angrenzend an den Kommissionierschacht 24 ist ein Palettenzwischenspeicher 36 vorgesehen, der beim Beladen von Rollbehältern 12 nicht benötigt wird. Der Palettenzwischenspeicher 36 ist so ausgebildet, wie dies in der deutschen Offenlegungsschrift DE 10 2014 220 046 B4 bzw. der deutschen Gebrauchsmusterschrift DE 20 2016 001 581 U1 beschrieben ist. Der Palettenzwischenspeicher 36 wird lediglich dann verwendet, wenn anstelle von Rollbehältern 12 Paletten beladen oder entladen werden sollen. Paletten können anstelle des Rollbehälters 12 auf dem Greifer 20 angeordnet werden und dann in den Kommissionierschacht 24 eingebracht werden.

Gegenüberliegend dem Palettenzwischenspeicher 36 ist in der Begrenzungswand 32 des Kommissionierschachts 24 eine Öffnung 38 zu erkennen. Durch diese Öffnung 38 kann eine Zunge 40 in den Kommissionierschacht 24 eingefahren oder ausgefahren werden. Die Zunge 40 kann darüber hinaus im Kommissionierschacht 24 angehoben und abgesenkt werden.

Ladegut wird mittels des Roboters 30 zunächst auf der Zunge 40 angeordnet und dann von der Zunge 40 auf den Ladeboden 14 des Rollbehälters 12 abgestreift. Mit der erfindungsgemäßen Vorrichtung wird in der Kommissionierebene 26 infolgedessen zunächst nicht der Ladeboden 14 des Rollbehälters 12, sondern die Zunge 40 mit Ladegut beladen. Dies ermöglicht es, dass eine sehr gute Zugänglichkeit im Bereich der Kommissionierebene 26 gegeben ist und der Roboter 30 nicht zwischen die beiden Gitterwände 16 des Rollbehälters 12 einfahren muss, um Ladegut auf dem Ladeboden 14 abzulegen. Vielmehr wird mit der erfindungsgemäßen Vorrichtung 10 ein Ladegutstapel auf der Zunge 40 gestapelt, und der vollständige Ladegutstapel wird dann auf den Ladeboden 14 abgestreift, wie nachfolgend noch erläutert wird.

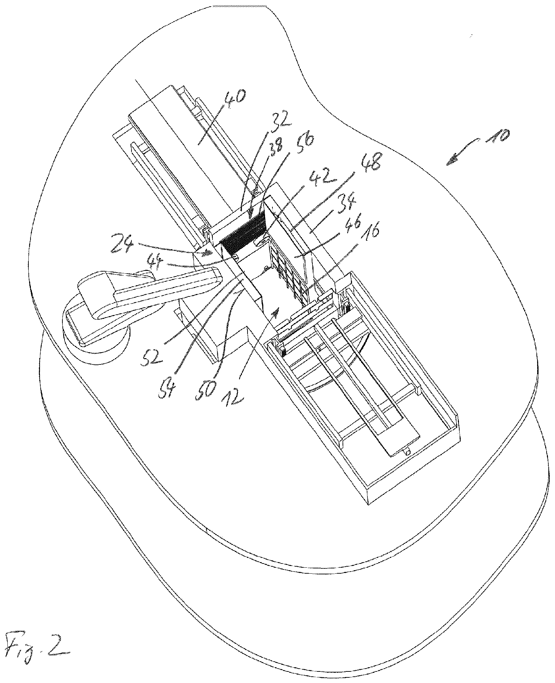

Im Zustand der Fig. 2 ist die Vorrichtung 10 in einer Blickrichtung von oben zu erkennen. Der Rollbehälter 12 wird mittels des Greifers 20 entlang dem Mast 22 nach oben gefahren. Aus der Begrenzungswand 32 des Kommissionierschachts 24 sind zwei Führungsrollen 42, 44 ausgefahren worden, so dass sie in den Innenraum des Kommissionierschachts 24 hineinragen. Diese Führungsrollen 42 greifen an den Oberkanten der Gitterwände 16 des Rollbehälters 12 an und spreizen diese dadurch nach außen und bringen diese dadurch in eine definierte Position zu den Begrenzungswänden des Kommissionierschachts 24.

Aus der Begrenzungswand 34 ist ein Führungsblech 46 in Richtung auf den Innenraum des Kommissionierschachts 24 ausgefahren worden, so dass zwischen einer in Fig. 2 dem Betrachter abgewandten Rückseite des Führungsblechs 46 und der dem Betrachter zugewandten Vorderseite der Begrenzungswand 34 eine schlitzartige Führung 48 gebildet ist. In diese schlitzartige Führung 48 wird mittels der Führungsrolle 42 die in Fig. 2 sichtbare Gitterwand 16 des Rollbehälters 12 eingeschoben. Wird also der Rollbehälter 12 ausgehend von der in Fig. 2 dargestellten Stellung noch weiter angehoben, so verschwindet die Gitterwand 16 in der schlitzartigen Führung 48. Wesentlich ist dabei, dass eine Begrenzung des Kommissionierschachts 24 durch die glattflächige Vorderseite des Führungsblechs 46 gebildet ist und nicht durch die Gitterwand 16. Beim Beladen oder Entladen von Ladegut ist somit nicht zu befürchten, dass Ladegut an der Gitterwand 16 hängen bleibt.

Aus der Begrenzungswand 50 des Kommissionierschachts 24, die der Begrenzungswand 34 gegenüberliegt, ist ebenfalls ein Führungsblech 52 in Richtung auf den Innenraum des Kommissionierschachts ausgefahren worden, so dass eine weitere schlitzartige Führung 54 für die gegenüberliegende, in Fig. 2 nicht sichtbare Gitterwand des Rollwagens 12 gebildet ist. Beim Anheben des Rollwagens 12 ausgehend von der in Fig. 2 dargestellten Stellung tauchen somit die beiden Gitterwände 16 in die schlitzartigen Führungen 48 bzw. 54 ein. Auch das Führungsblech 52 bildet mit seiner dem Innenraum des Kommissionierschachts 24 zugewandten Vorderseite dadurch eine glattflächige Begrenzung des Kommissionierschachts 24. Beim Absenken von Ladegut in den Kommissionierschacht ist dadurch nicht zu befürchten, dass Ladegut an der Gitterwand des Rollbehälters 12 hängen bleibt.

Die Zunge 40 ist im Zustand der Fig. 2 noch außerhalb des Kommissionierschachts 24 angeordnet. Die Öffnung 38 in der Begrenzungswand 32 ist mittels eines Rollladens 56 vollständig verschlossen.

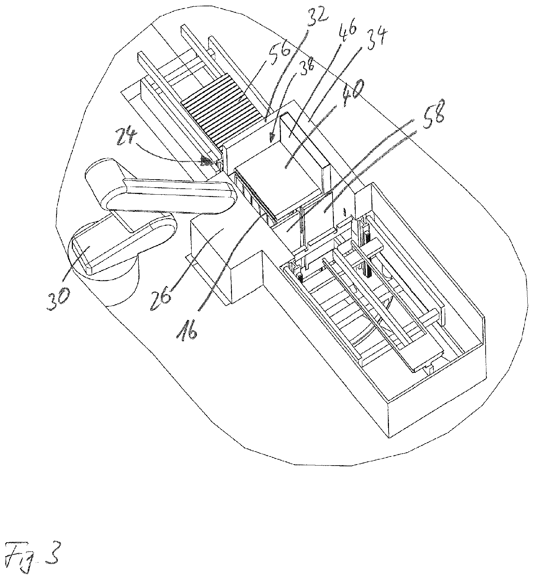

Im Zustand der Fig. 3 wurde der Rollbehälter 12 ausgehend von dem in Fig. 2 gezeigten Zustand angehoben, so dass nun die Gitterwände 16 des Rollbehälters in die schlitzartigen Führungen 48 bzw. 54 eingetaucht sind. Der Rollbehälter 12 wird dabei so weit angehoben, siehe Fig. 3, bis die Oberkante der Gitterwände 16 etwa auf Höhe der Kommissionierebene 26 angeordnet ist. Die Zunge 40 ist nun seitlich in den Kommissionierschacht 24 eingefahren worden. Eine Schachtverengungswand in Form einer doppelflügeligen Türe 58 ist geschlossen worden, so dass ein Querschnitt des Kommissionierschachts 24 verengt ist. Beim auf den Zustand der Fig. 3 folgenden Absenkvorgang der Zunge 40 wird durch die doppelflügelige Türe 58 verhindert, dass Ladegut von der Zunge 40 nach unten in den Kommissionierschacht 24 fällt.

Wie Fig. 3 zu entnehmen ist, verschließt die Zunge 40 den Kommissionierschacht 24 nach unten so weit, dass kein Ladegut an der Zunge 40 vorbei in den Kommissionierschacht 24 fallen kann.

Der Rollladen 56 wurde gegenüber dem Zustand der Fig. 2 zurückgezogen, so dass die Öffnung 38, durch die die Zunge 40 in den Kommissionierschacht 24 hineinragt, nun vollständig freigegeben ist. Im Zustand der Fig. 3 liegt die Oberseite der Zunge 40 an der Unterseite der oberen Begrenzung der Öffnung 38 an.

Ausgehend vom Zustand der Fig. 3 kann nun mittels des Roboters 30 Ladegut auf der Zunge 40 gestapelt werden. Dabei dienen die über die Kommissionierebene 26 hinausragende Begrenzungswand 32 als Anschlag und das parallel zur Begrenzungswand 34 angeordnete Führungsblech 46 als weiterer Anschlag. Die Begrenzungswand 32 und das Führungsblech 46 sind im rechten Winkel zueinander angeordnet.

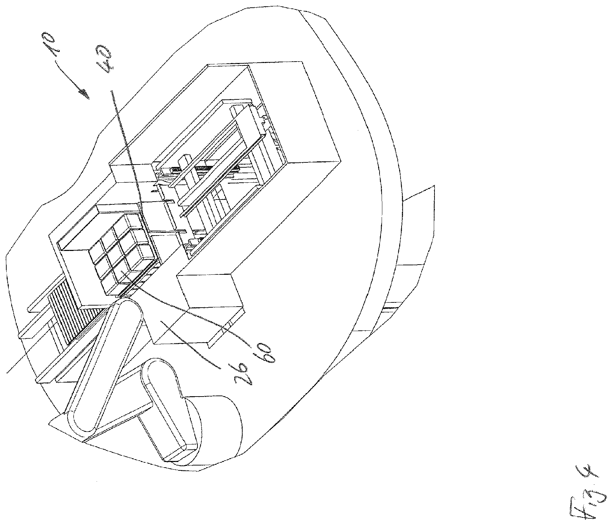

Fig. 4 zeigt einen Zustand der Vorrichtung 10, in dem die Zunge 40 bereits mit einer Ladegutschicht belegt ist. Insgesamt sind neun Ladegüter 60 auf der Oberseite der Zunge 40 angeordnet worden. Die Zunge befindet sich noch in derselben Position wie in Fig. 3. Beim weiteren Beladen der Zunge 40 mit Ladegut 60 kann die Zunge 40 dann schrittweise abgesenkt werden, so dass eine Oberseite der zuletzt aufgebrachten Ladegutschicht immer etwa auf Höhe der Kommissionierebene 26 angeordnet ist.

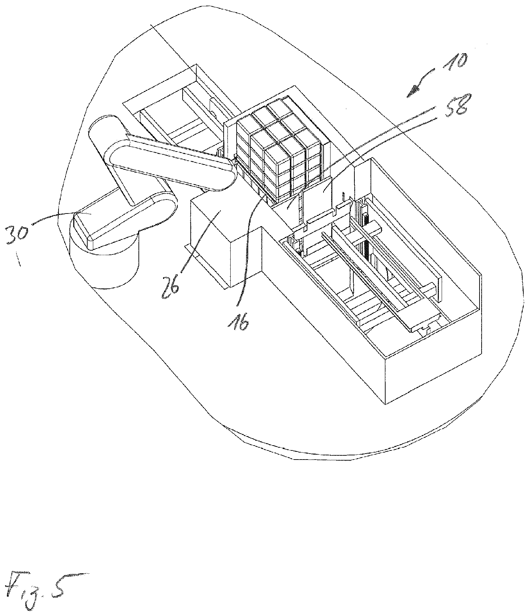

Fig. 5 zeigt die Vorrichtung 10 in einem Zustand, in dem der Roboter 30 die nicht mehr erkennbare Zunge 40 vollständig beladen hat und der Ladegutstapel seine vorgesehene maximale Höhe erreicht hat. Ausgehend vom Zustand der Fig. 4 wurde die Zunge 40 dabei schrittweise abgesenkt. Die doppelflügelige Schwenktüre 58 ist noch geschlossen und verhindert, dass Ladegut in den Kommissionierschacht 24 fällt. Der Rollbehälter 12 hat seine Position gegenüber den Fig. 3 und 4 nicht verändert. Der Rollladen 56 ist zusammen mit der Abwärtsbewegung der Zunge 40 ausgefahren worden und verschließt die Öffnung 38 oberhalb der Zunge 40. Auch durch die Öffnung 38 kann somit kein Ladegut 60 herausfallen. Die Oberkante einer Gitterwand 16 ist unverändert etwa auf Höhe der Kommissionierebene 26 angeordnet.

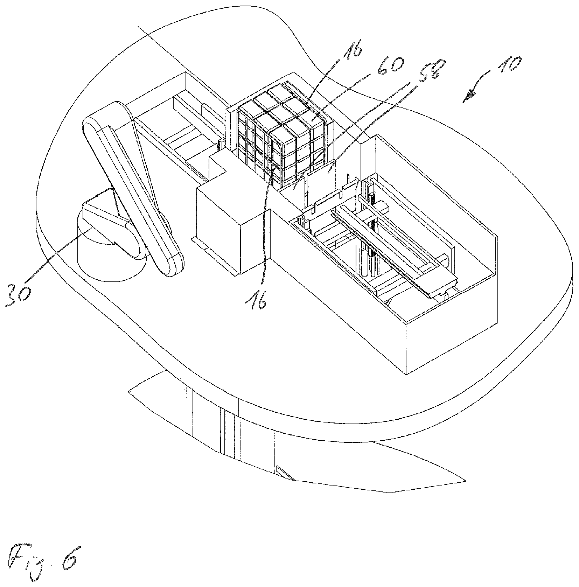

Da der Beladevorgang nun abgeschlossen ist, verlässt der Roboter 30 den Kommissionierbereich und schwenkt seitlich weg, wie in Fig. 6 zu erkennen ist.

Im Zustand der Fig. 6 wurde der Rollbehälter 12 nun so weit angehoben, dass die Oberkanten der Gitterwände 16 im Wesentlichen auf Höhe der Oberseite des Ladegutstapels angeordnet sind. Der Ladegutstapel aus zahlreichen Ladegütern 60 liegt aber immer noch auf der Oberseite der Zunge 40 auf, die in Fig. 6 nicht zu erkennen ist. Die doppelflügelige Schwenktüre 58 ist unverändert geschlossen.

Ausgehend vom Zustand der Fig. 6 muss nun der Ladegutstapel von der Oberseite der Zunge 40 auf die Oberseite des Ladebodens 14 des Rollbehälters 12 gebracht werden. Hierzu wird die Zunge 40 unter dem Ladegutstapel herausgezogen und der Ladegutstapel dadurch auf dem Ladeboden 14 abgelegt.

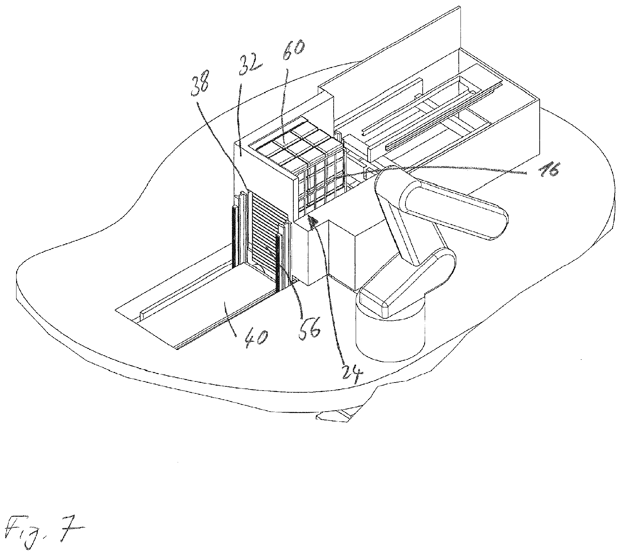

Vor dem Herausziehen der Zunge 40 muss die Öffnung 38 in der Begrenzungswand 32 mittels des Rollladens 56 bis zur Oberseite der Zunge 40 verschlossen sein. Diese Stellung des Rollladens 56 ist in Fig. 7 dargestellt. Der Rollladen 56 wird so weit geschlossen, bis seine Unterkante auf der Oberseite der Zunge 40 aufliegt oder kurz oberhalb der Oberseite der Zunge 40 angeordnet ist. Die Öffnung 38 ist dadurch verschlossen. Nachfolgend wird die Zunge 40 seitlich aus dem Kommissionierschacht 24 herausgezogen. Im Zustand der Fig. 7 ist die Zunge 40 bereits vollständig aus dem Kommissionierschacht 24 herausgezogen worden. Der Ladegutstapel bewegt sich zunächst mit der Zunge 40 mit, bis der Ladegutstapel an die Begrenzungswand 32 und den Rollladen 56 stößt. Der Ladegutstapel ist dann in der Auszugsrichtung der Zunge 40 fixiert und die Zunge 40 kann unter dem Ladegutstapel herausgezogen werden. Sobald die Zunge 40 vollständig aus dem Kommissionierschacht 24 herausgezogen ist, ist dadurch der Ladegutstapel von der Zunge 40 auf den Ladeboden 14 des Rollbehälters 12 abgestreift und liegt dadurch nun sicher zwischen den beiden Gitterwänden 16 auf dem Ladeboden 14 des Rollbehälters 12.

Nachdem nun der Rollbehälter 12 vollständig beladen ist, wird dieser ausgehend von der in Fig. 7 dargestellten Stellung im Kommissionierschacht 24 abgesenkt. Der Rollladen 56 und die dem Rollladen 56 gegenüberliegende doppelflügelige Schwenktüre 58 verhindern dabei, dass Ladegut 60 aus dem Zwischenraum zwischen den beiden Gitterwänden 16 herausfallen kann.

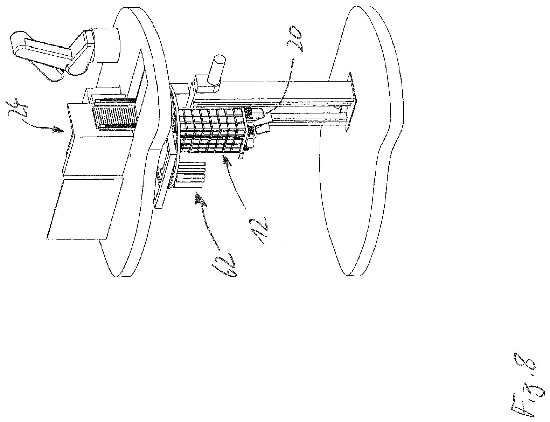

Fig. 8 zeigt den Zustand des nun vollständig beladenen Rollbehälters 12, in dem dieser bereits nach unten aus dem Kommissionierschacht 24 herausgefahren wurde. Um den Ladegutstapel im Rollbehälter 12 zu stabilisieren, wird der Rollbehälter 12 beim Herausfahren aus dem Kommissionierschacht 24 mit einer Wickeleinrichtung 62 mit Kunststofffolie umwickelt. Der dann fertig beladene und stabilisierte Rollbehälter 12 wird dann mittels des Greifers 20 nach unten abgesenkt, auf in Fig. 8 nicht dargestellte Transporteinrichtungen gesetzt und abgefahren. Nachfolgend kann ein leerer Rollbehälter 12 auf den Greifer 20 aufgesetzt werden, wie in Fig. 1 dargestellt ist, und nachfolgend beladen werden.

Mit der erfindungsgemäßen Vorrichtung ist dadurch das vollautomatisierte Beladen von Rollbehältern 12 möglich. Mit der erfindungsgemäßen Vorrichtung 10 können, wie erwähnt wurde, wahlweise auch Paletten mit Ladegut beladen oder beladene Paletten können entladen werden. Die erfindungsgemäße Vorrichtung ist dadurch äußerst flexibel einzusetzen.

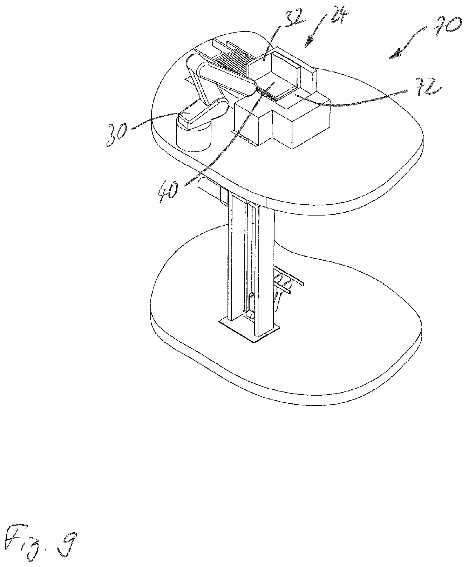

Fig. 9 zeigt eine weitere erfindungsgemäße Vorrichtung 70 gemäß der Erfindung, die in weiten Teilen gleich wie die Vorrichtung 10 der Fig. 1 aufgebaut ist. Es werden daher lediglich die Unterschiede zur Vorrichtung 10 der Fig. 1 erläutert.

Die Vorrichtung 70 der Fig. 9 weist keinen Palettenzwischenspeicher auf. Die der Begrenzungswand 32 des Kommissionierschachts 24 gegenüberliegende Begrenzungswand 72 ist verschiebbar ausgebildet. Beim Beladen der Zunge 40 mit Ladegut durch den Roboter 30 und dem schrittweisen Absenken der Zunge 40 in Abhängigkeit von ihrem Beladezustand ist die Begrenzungswand 72, wie in Fig. 9 dargestellt ist, nach innen in Richtung auf die gegenüberliegende Begrenzungswand 32 verschoben und kurz vor dem freien Ende der Zunge 40 angeordnet. Dadurch wird verhindert, dass Ladegut von der Zunge 40 nach unten in den Kommissionierschacht 24 fallen kann.

Im Übrigen arbeitet die Vorrichtung 70 aber in gleicher Weise wie dies bereits anhand der Vorrichtung 10 und der Fig. 1 bis 8 beschrieben wurde.

## Patentansprüche

1. Vorrichtung (10, 70) zum Kommissionieren von Ladegut in Rollbehälter (12), wobei der Rollbehälter (12) einen Ladeboden (14) und wenigstens eine seitliche Gitterwand (16) aufweist, mit einer Kommissionierbühne (28), einem Kommissionierschacht (24), der sich bis zu einer Kommissionierebene (26), in der Ladegut während des Kommissionierens bewegt wird, auf der Kommissionierbühne (28) erstreckt, einer Hub- und Absenkvorrichtung (18) zum Heben und Absenken des Rollbehälters (12) in dem Kommissionierschacht (24), **gekennzeichnet durch** einer in den Kommissionierschacht (24) von der Seite her einfahrbaren und wieder ausfahrbaren Zunge (40) zum Beladen mit Ladegut, einer Vorrichtung zum schrittweisen Absenken der Zunge (40) während des Beladens mit Ladegut, so dass eine Oberseite einer zuletzt auf die Zunge (40) gelegten Ladegutschicht etwa auf Höhe der Kommissionierebene (26) angeordnet ist, und Abstreifmitteln, die zumindest beim Ausfahren der Zunge (40) aus dem Kommissionierschacht (24) Ladegut von der Oberseite der Zunge (40) auf den Ladeboden (14) des Rollbehälters (12) abstreifen.

2. Vorrichtung (10, 70) nach Anspruch 1, **dadurch gekennzeichnet, dass** die Abstreifmittel einen bewegbaren Anschlag aufweisen.

3. Vorrichtung (10, 70) nach Anspruch 2, **dadurch gekennzeichnet, dass** der bewegbare Anschlag mittels eines Rollladens (56) ausgebildet ist, der eine Öffnung (38) in einer ersten Begrenzungswand (32) des Kommissionierschachts (24), durch die die Zunge (40) in den Kommissionierschacht (24) ein- und ausgefahren werden kann, wenigstens abschnittsweise verschließen kann.

4. Vorrichtung (10, 70) nach wenigstens einem der vorstehenden Ansprüche, **dadurch gekennzeichnet, dass** die Zunge (40) durch eine Öffnung (38) in einer ersten Begrenzungswand (32) des Kommissionierschachts (24) ein- und ausgefahren werden kann und dass eine zweite, der ersten Begrenzungswand (32) gegenüberliegende Begrenzungswand (34) des Kommissionierschachts (24) in Richtung auf den Innenraum des Kommissionierschachts (24) zu bewegbar ausgebildet ist oder dass eine Schachtverengungswand in Richtung auf den Innenraum des Kommissionierschachts (24) zu bewegt werden kann.

5. Vorrichtung (10, 70) nach wenigstens einem der vorstehenden Ansprüche, **dadurch gekennzeichnet, dass** eine schlitzartige Führung (48) für die wenigstens eine Gitterwand (16) des Rollbehälters (12) vorgesehen ist, wobei sich die Führung (48) von der Kommissionierebene (26) aus nach unten erstreckt und wobei eine Vorderfläche der schlitzartigen Führung (48) eine Begrenzung des Kommissionierschachts (24) bildet.

6. Vorrichtung (10, 70) nach wenigstens einem der vorstehenden Ansprüche, **dadurch gekennzeichnet, dass** sich zwei im rechten Winkel zueinander angeordnete und aneinander angrenzende Begrenzungswände (32, 34) des Kommissionierschachts (24) über die Kommissionierebene (26) hinaus erstrecken.

7. Vorrichtung (10, 70) nach wenigstens einem der vorstehenden Ansprüche, **dadurch gekennzeichnet, dass** zum automatischen Beladen oder Entladen ein Roboter (30) oder ein Ladeportal vorgesehen ist.

8. Vorrichtung (10, 70) nach wenigstens einem der vorstehenden Ansprüche, **dadurch gekennzeichnet, dass** in einem unterhalb der Kommissionierebene (26) an die Kommissionierebene (26) anschließenden Bereich verstellbare Begrenzungswände des Kommissionierschachts (24) vorgesehen sind, um einen freien Querschnitt des Kommissionierschachts (24) wahlweise zu verändern.

9. Vorrichtung (10, 70) nach wenigstens einem der vorstehenden Ansprüche, **dadurch gekennzeichnet, dass** gegenüber der Seite des Kommissionierschachts (24), von der die Zunge (40) eingefahren wird, ein Palettenzwischenspeicher (36) angeordnet ist.

10. Verfahren zum Kommissionieren von Ladegut in einen Rollbehälter (12) mit einer Vorrichtung (10, 70) nach wenigstens einem der vorstehenden Ansprüche und mit folgenden Schritten: Einbringen des Rollbehälters (12) in den Kommissionierschacht (24), so dass eine Oberseite der wenigstens einen seitlichen Gitterwand (16) unterhalb oder auf Höhe der Kommissionierebene (26) angeordnet ist, wobei in der Kommissonierebene (26) Ladegut während des Kommissionierens bewegt wird, **gekennzeichnet durch** die folgenden Schritte: seitliches Einfahren der Zunge (40) in den Kommissionierschacht (24), so dass die Zunge (40) den Kommissionierschacht (24) nach unten gegen Herunterfallen von Ladegut verschließt und eine Oberseite der Zunge (40) im Wesentlichen auf Höhe der Kommissionierebene (26) angeordnet ist, schichtweises Beladen der Oberseite der Zunge (40) mit Ladegut, gegebenenfalls schrittweises Absenken der Zunge (40) im Kommissionierschacht (24) während des Beladens mit Ladegut, so dass eine Oberseite der zuletzt gestapelten Ladegutschicht etwa auf Höhe der Kommissionierebene (26) liegt, Anheben des Rollbehälters (12) bis die Oberseite des Ladebodens (14) des Rollbehälters (12) unmittelbar unterhalb der Unterseite der Zunge (40) angeordnet ist oder an der Unterseite der Zunge (40) anliegt, und Herausziehen der Zunge (40) aus dem Kommissionierschacht (24) und gleichzeitiges Abstreifen des auf der Zunge (40) aufliegenden Ladeguts auf den Ladeboden (14) des Rollbehälters (12).

11. Verfahren nach Anspruch 10, **gekennzeichnet durch** Abstreifen des auf der Zunge (40) aufliegenden Ladeguts durch wenigstens teilweises Verschließen einer Öffnung (38) in der seitlichen Begrenzungswand (32) des Kommissionierschachts (24), durch die die Zunge (40) eingefahren und ausgefahren wird, mittels eines bewegbaren Anschlags und Herausziehen der Zunge (40) aus dem Kommissionierschacht (24).

12. Verfahren nach Anspruch 11, **gekennzeichnet durch** Verschließen der Öffnung (38) in der seitlichen Begrenzungswand (32) mittels eines als Anschlag wirkenden Rollladens (56), wobei eine Unterkante des Rollladens (56) vor dem Herausziehen der Zunge (40) unmittelbar oberhalb oder auf der Oberseite der Zunge (40) angeordnet wird.

13. Verfahren nach wenigstens einem der Ansprüche 10 bis 12, **gekennzeichnet durch** Einführen der wenigstens einen Gitterwand (16) des Rollwagens (12) in eine schlitzartige Führung (48), wobei die schlitzartige Führung (48) eine Trennfläche zwischen der Gitterwand (16) und dem Innenraum des Kommissionierschachts (24) bildet.

14. Verfahren nach Anspruch 13, **gekennzeichnet durch** Ausfahren der schlitzartigen Führung (48) in Richtung auf den Innenraum des Kommissionierschachts (24) vor dem Einführen der Gitterwand (16).

15. Verfahren nach einem der Ansprüche 10 bis 14, **gekennzeichnet durch** Bewegen einer Begrenzungswand des Kommissionierschachts (24) oder einer Schachtverengungswand in Richtung auf den Innenraum des Kommissionierschachts (24) auf einer Seite des Kommissionierschachts (24), die der Seite des Kommissionierschachts (24), durch die die Zunge (40) eingefahren wird, gegenüberliegt.

## Claims

1. Device (10, 70) for commissioning of cargo goods into roller containers (12), wherein the roller container (12) has a loading floor (14) and at least one lateral lattice wall (16), including a commissioning platform (28), a commissioning shaft (24) which extends up to a commissioning level (26) on the commissioning platform (28) on which cargo goods are moved during the commissioning procedure, a lifting and lowering device (18) for raising and lowering the roller container (12) in the commissioning shaft (24),
**characterized by**
a tongue (40) capable of being inserted and retracted again from the side into the commissioning shaft (24) for loading with cargo goods, a device for stepwise lowering of the tongue (40) during the loading with cargo goods such that an upper side of a layer of cargo goods last placed onto the tongue (40) is located approximately at the height of the commissioning level (26), and stripping means to strip cargo goods from the upper side of the tongue (40) to the loading floor (14) of the roller container (12) at least upon retracting the tongue (40) from the commissioning shaft (24).

2. Device (10, 70) according to claim 1, **characterized in that** the stripping means have a movable end stop.

3. Device (10, 70) according to claim 2, **characterized in that** the movable end stop is provided by a roller shutter (56) which can close an opening (38) in a first boundary wall (32) of the commissioning shaft (24), through which opening the tongue (40) can be inserted into and retracted from the commissioning shaft (24), at least partially.

4. Device (10, 70) according to at least one of the preceding claims, **characterized in that** the tongue (40) can be inserted and retracted through an opening (38) in a first boundary wall (32) of the commissioning shaft (24), and **in that** a second boundary wall (34), located opposite the first boundary wall (32), of the commissioning shaft (24) is configured to be movable in the direction towards the interior of the commissioning shaft (24), or **in that** a shaft narrowing wall can be moved in the direction towards the interior of the commissioning shaft (24).

5. Device (10, 70) according to at least one of the preceding claims, **characterized in that** a slot-type guide (48) for the at least one lattice wall (16) of the roller container (12) is provided, wherein the guide (48) extends from the commissioning level (26) downwards, and wherein a front face of the slot-type guide (48) is a boundary of the commissioning shaft (24).

6. Device (10, 70) according to at least one of the preceding claims, **characterized in that** two boundary walls (32, 34), disposed at right angles and adjacent to each other, of the commissioning shaft (24) extend beyond the commissioning level (26).

7. Device (10, 70) according to at least one of the preceding claims, **characterized in that** for automated loading and unloading a robot (30) or a loading gantry is provided.

8. Device (10, 70) according to at least one of the preceding claims, **characterized in that** in a region adjoining the commissioning level (26) below the commissioning level (26) adjustable boundary walls of the commissioning shaft (24) are provided, in order to selectively vary a free cross section of the commissioning shaft (24).

9. Device (10, 70) according to at least one of the preceding claims, **characterized in that** opposite that side of the commissioning shaft (24) from which the tongue (40) is inserted, a pallet intermediate storage (36) is disposed.

10. Method for commissioning of cargo goods into a roller container (12) using the device (10, 70) according to at least one of the preceding claims and comprising the following steps: bringing the roller container (12) into the commissioning shaft (24) such that an upper side of the at least one lateral lattice wall (16) is located below or at the height of the commissioning level (26), wherein on the commissioning level (26) cargo goods are moved during the commissioning procedure, **characterized by** the following steps:
lateral inserting of the tongue (40) into the commissioning shaft (24) such that the tongue (40) closes the commissioning shaft (24) to the bottom against falling down of cargo goods and an upper side of the tongue (40) is essentially located at the height of the commissioning level (26),
loading the upper side of the tongue (40) with cargo goods in layers, optionally gradual lowering of the tongue (40) in the commissioning shaft (24) during the loading with cargo goods such that an upper side of the last stacked cargo goods layer is approximately at the height of the commissioning level (26),
raising the roller container (12) until the upper side of the loading floor (14) of the roller container (12) is located immediately below the lower side of the tongue (40), or abuts on the lower side of the tongue (40), and
withdrawing the tongue (40) from the commissioning shaft (24) and at the same time stripping the cargo goods resting on the tongue (40) onto the loading floor (14) of the roller container (12).

11. Method according to claim 10, **characterized by** stripping the cargo goods resting on the tongue (40) by at least partially closing an opening (38) in the lateral boundary wall (32) of the commissioning shaft (24), through which opening the tongue (40) is inserted and retracted, by means of a movable end stop and withdrawing the tongue (40) from the commissioning shaft (24).

12. Method according to claim 11, **characterized by** closing the opening (38) in the lateral boundary wall (32) by means of a roller shutter (56) acting as an end stop, wherein, prior to withdrawing of the tongue (40), a lower edge of the roller shutter (56) is placed immediately above or on the upper side of the tongue (40).

13. Method according to at least one of the claims 10 to 12, **characterized by** arranging the at least one lattice wall (16) of the roller container (12) in a slot-type guide (48), wherein the slot-type guide (48) forms a separating plane between the lattice wall (16) and the interior of the commissioning shaft (24).

14. Method according to claim 13, **characterized by** retracting the slot-type guide (48) in the direction towards the interior of the commissioning shaft (24), prior to arranging the lattice wall (16).

15. Method according to any one of the claims 10 to 14, **characterized by** moving a boundary wall of the commissioning shaft (24) or a shaft narrowing wall in the direction towards the interior of the commissioning shaft (24) on one side of the commissioning shaft (24) which is opposite to that side of the commissioning shaft (24) through which the tongue (40) is inserted.

## Revendications

1. Dispositif (10, 70) de préparation de commandes de marchandises chargées dans des conteneurs roulants (12), le conteneur roulant (12) présentant un plateau de chargement (14) et au moins une paroi grillagée latérale (16), comprenant une plate-forme de préparation de commandes (28), une gaine de préparation de commandes (24) qui s'étend jusqu'à un plan de préparation de commandes (26) sur la plate-forme de préparation de commandes (28) dans lequel des marchandises chargées sont déplacées pendant la préparation de commandes, un dispositif de levage et d'abaissement (18) pour lever et abaisser le conteneur roulant (12) dans la gaine de préparation de commandes (24), **caractérisé par** une planche (40) pouvant être rentrée dans et ressortie de la gaine de préparation de commandes (24) par le côté, destinée à être chargée avec des marchandises chargées, un dispositif pour l'abaissement progressif de la planche (40) pendant le chargement avec des marchandises chargées de sorte qu'une face supérieure d'une couche de marchandises chargées, posée en dernier sur la planche (40), est disposée approximativement à la hauteur du plan de préparation de commandes (26), et des moyens d'enlèvement qui enlèvent des marchandises chargées de la face supérieure de la planche (40) sur le plateau de chargement (14) du conteneur roulant (12) au moins lorsque la planche (40) est sortie de la gaine de préparation de commandes (24).

2. Dispositif (10, 70) selon la revendication 1, **caractérisé en ce que** les moyens d'enlèvement présentent une butée mobile.

3. Dispositif (10, 70) selon la revendication 2, **caractérisé en ce que** la butée mobile est réalisée au moyen d'un volet roulant (56) qui peut fermer au moins par endroits une ouverture (38) dans une première paroi de délimitation (32) de la gaine de préparation de commandes (24) à travers laquelle la planche (40) peut être rentrée dans et sortie de la gaine de préparation de commandes (24).

4. Dispositif (10, 70) selon au moins l'une des revendications précédentes, **caractérisé en ce que** la planche (40) peut être rentrée et sortie à travers une ouverture (38) dans une première paroi de délimitation (32) de la gaine de préparation de commandes (24), et **en ce qu'**une deuxième paroi de délimitation (34), opposée à la première paroi de délimitation (32), de la gaine de préparation de commandes (24) est réalisée de manière à pouvoir être déplacée en direction de l'espace intérieur de la gaine de préparation de commandes (24), ou **en ce qu'**une paroi de rétrécissement de gaine peut être déplacée en direction de l'espace intérieur de la gaine de préparation de commandes (24).

5. Dispositif (10, 70) selon au moins l'une des revendications précédentes, **caractérisé en ce qu'**un guidage (48) en forme de fente est prévu pour ladite au moins une paroi grillagée (16) du conteneur roulant (12), le guidage (48) s'étendant du plan de préparation de commande (26) vers le bas, et une surface avant du guidage (48) en forme de fente formant une délimitation de la gaine de préparation de commandes (24).

6. Dispositif (10, 70) selon au moins l'une des revendications précédentes, **caractérisé en ce que** deux parois de délimitation (32, 34) disposées à angle droit l'une par rapport à l'autre et adjacentes l'une à l'autre, de la gaine de préparation de commandes (24) s'étendent au-delà du plan de préparation de commandes (26).

7. Dispositif (10, 70) selon au moins l'une des revendications précédentes, **caractérisé en ce qu'**un robot (30) ou un portique de chargement est prévu pour le chargement ou le déchargement automatique.

8. Dispositif (10, 70) selon au moins l'une des revendications précédentes, **caractérisé en ce que** dans une zone adjacente au plan de préparation de commandes (26) au-dessous du plan de préparation de commandes (26), des parois de délimitation réglables de la gaine de préparation de commandes (24) sont prévues pour modifier au choix une section transversale libre de la gaine de préparation de commandes (24).

9. Dispositif (10, 70) selon au moins l'une des revendications précédentes, **caractérisé en ce qu'**un stockage tampon de palettes (36) est disposé à l'opposé du côté de la gaine de préparation de commandes (24) à partir duquel la planche (40) est rentrée.

10. Procédé de préparation de commandes de marchandises chargées dans un conteneur roulant (12), comprenant un dispositif (10, 70) selon au moins l'une des revendications précédentes, et comprenant les étapes suivantes consistant à: introduire le conteneur roulant (12) dans la gaine de préparation de commandes (24) de sorte qu'une face supérieure de ladite au moins une paroi grillagée latérale (16) est disposée au-dessous ou à la hauteur du plan de préparation de commandes (26), des marchandises chargées étant déplacées dans le plan de préparation de commande (26) pendant la préparation de commandes,
**caractérisé par** les étapes suivantes consistant à : rentrer latéralement la planche (40) dans la gaine de préparation de commandes (24) de sorte que la planche (40) ferme la gaine de préparation de commandes (24) vers le bas pour empêcher la chute de marchandises chargées, et une face supérieure de la planche (40) est disposée substantiellement à la hauteur du plan de préparation de commandes (26), charger par couches la face supérieure de la planche (40) avec des marchandises chargées, éventuellement abaisser progressivement la planche (40) dans la gaine de préparation de commandes (24) pendant le chargement avec des marchandises chargées de sorte qu'une face supérieure de la couche de marchandises chargées empilée en dernier se trouve approximativement à la hauteur du plan de préparation de commandes (26), lever le conteneur roulant (12) jusqu'à ce que la face supérieure du plateau de chargement (14) du conteneur roulant (12) soit disposée directement au-dessous de la face inférieure de la planche (40) ou s'applique contre la face inférieure de la planche (40), et extraire la planche (40) de la gaine de préparation de commandes (24) et enlever en même temps les marchandises chargées posées sur la planche (40) sur le plateau de chargement (14) du conteneur roulant (12).

11. Procédé selon la revendication 10, **caractérisé par** l'enlèvement des marchandises chargées posées sur la planche (40) par la fermeture au moins partielle d'une ouverture (38) dans la paroi de délimitation latérale (32) de la gaine de préparation de commandes (24) à travers laquelle la planche (40) est rentrée et sortie, au moyen d'une butée mobile, et l'extraction de la planche (40) de la gaine de préparation de commandes (24).

12. Procédé selon la revendication 11, **caractérisé par** la fermeture de l'ouverture (38) dans la paroi de délimitation latérale (32) au moyen d'un volet roulant (56) servant de butée, un bord inférieur du volet roulant (56), avant l'extraction de la planche (40), étant disposé directement au-dessus ou sur la face supérieure de la planche (40).

13. Procédé selon l'une quelconque des revendications 10 à 12, **caractérisé par** l'introduction de ladite au moins une paroi grillagée (16) du conteneur roulant (12) dans un guidage (48) en forme de fente, le guidage (48) en forme de fente formant une surface de séparation entre la paroi grillagée (16) et l'espace intérieur de la gaine de préparation de commandes (24).

14. Procédé selon la revendication 13, **caractérisé par** la sortie du guidage (48) en forme de fente en direction de l'espace intérieur de la gaine de préparation de commandes (24) avant l'introduction de la paroi grillagée (16).

15. Procédé selon l'une quelconque des revendications 10 à 14, **caractérisé par** le déplacement d'une paroi de délimitation de la gaine de préparation de commandes (24) ou d'une paroi de rétrécissement de gaine en direction de l'espace intérieur de la gaine de préparation de commandes (24) sur un côté de la gaine de préparation de commandes (24) qui est opposé au côté de la gaine de préparation de commandes (24) par lequel la planche (40) est rentrée.
